# EUROPEAN PATENT APPLICATION

(11) **EP 1 688 528 A1**
(43) Date of publication of application: **09.08.2006**
(21) Application number: 05254719.7
(22) Date of filing: 28.07.2005
(51) Int. Cl.: D06F 39/06, D06F 33/02, D06F 39/00, D06F 39/08

(54) **Washing machine and foam sensing method thereof**

(30) Priority: 02.02.2005 KR 2005009573
(71) Applicant: Samsung Electronics Co., Ltd., Suwon-si, Gyeonggi-Do (KR)
(72) Inventor: Ha, Yo Chul, Suwon-Si, Gyeonggi-Do (KR); Chai, Chang Joo, Paldal-Gu, Suwon-Si, Gyeonggi-Do (KR)
(74) Representative: Davies, Robert Ean

(57) **Abstract**

A washing machine and a suds sensing method thereof, in which a generation of suds is precisely sensed using discharge characteristics of suds in a water discharging operation. The suds sensing method of a washing machine includes determining (S140) whether a water level reaches a water discharge completion level in a predetermined water discharging time (Tend) in a water discharging operation, determining whether the water level reaches a suds sensing level in a predetermined suds discharging time (Tpre) by controlling a drainage device (19) such that the drainage device is turned on and off when the water level does not reach the water discharge completion level in the predetermined water discharging time, and sensing the suds by controlling the drainage device (19) such that the drainage device is turned on and off in a predetermined range of the water level when the water level reaches the suds sensing level in the predetermined suds discharging time.

## Description

The present invention relates to a method for sensing suds in a washing machine, and more particularly, but not exclusively, to a washing machine, which senses a generation of suds using discharge characteristics of the suds, and suds sensing method thereof.

Generally, a conventional drum-type washing machine is an apparatus for washing laundry in a cylindrical rotary drum by lifting the laundry and then dropping the laundry when the rotary drum is rotated. Compared to a conventional pulsator-type washing machine, the drum-type washing machine has a longer washing time, but minimizes damage to the laundry and has a low water consumption rate, thus being increasingly demanded.

In the conventional drum-type washing machine, when a user uses a large amount of a detergent exceeding a reference amount or a detergent which lathers well, a large amount of suds are generated by a detergent component remaining in laundry in a dehydrating operation after a discharging operation. The suds are leaked to the front surface of the washing machine (for example, through a detergent inlet), or serves as a load obstructing the driving of a motor, thereby causing a difficulty in reaching a normal dehydration rpm (revolutions per minute).

In order to address the above problem, Korean Patent Publication No. 10-0282343 discloses a method for sensing the generation of suds and eliminating the suds, where a washing machine determines whether suds are generated by sensing whether a load applied to a motor is increased, and, when a large amount of the suds are generated, eliminates the suds through a suds eliminating process in which a water supplying operation, a rinsing operation, and a water discharging operation are repeated.

In the conventional suds sensing method, there is a high probability of an error due to a variation of an output of the motor according to a variation in an amount of laundry to be washed or a variation in voltage power. Accordingly, the above conventional suds sensing method is disadvantageous in that the washing performance of the washing machine is deteriorated or electricity is wasted due to the error in precisely sensing the suds.

Accordingly, it is an aim of embodiments of the present invention to provide a washing machine, which precisely senses the generation of suds using discharging characteristics of the suds, and a suds sensing method thereof.

Additional aspects and/or advantages of the invention will be set forth in part in the description which follows and, in part, will be apparent from the description, or may be learned by practice of the invention.

It is another aspect of the present invention to provide a washing machine, which precisely senses whether a discharge pump malfunctions or foreign substances are present in the discharge pump, and whether suds are generated according to a variation in a water level during a water discharging operation of the washing machine, and a suds sensing method thereof.

According to a first aspect of the invention, there is provided a suds sensing method of a washing machine including discharging water by determining whether a water level reaches a water discharge completion level in a predetermined water discharging time in a water discharging operation, discharging suds by controlling a drainage device such that the drainage device is turned on and off when the water level does not reach the water discharge completion level in the predetermined water discharging time, and sensing the suds by detecting a water level varying according to the turning on and off of the drainage device.

The predetermined water discharging time may be set to a water discharge completion time, which is time taken to discharge a maximum amount of the water during operations of the washing machine.

When discharging the suds, the drainage device may be controlled such that the drainage device is turned on and off during a predetermined time to distinguish between the suds and foreign substances in the drainage device.

The predetermined time may be a suds discharging time, which is time taken to discharge the suds according to the turning on and off of the drainage device, and the suds discharging time may be determined by a volume of the washing machine and a capacity of the drainage device.

Further, it may be determined that the water level data reaches a suds sensing level in a predetermined suds discharging time according to the turning on and off of the drainage device.

The drainage device is controlled such that the drainage device is turned on and off in a predetermined range of the water level to distinguish between the suds and foreign substances in the drainage device, when the water level reaches the suds sensing level in the predetermined suds discharging time.

The predetermined range of the water level may be set lower than the suds sensing level, and include an upper limit and a lower limit for controlling the drainage device such that the drainage device is turned on and off.

A number of suds-sensing times according to the turning on and off of the drainage device may be sensed, and it may be determined that suds are generated when the number of suds-sensing times is more than a designated number.

When discharging the suds, the drainage device is controlled such that the drainage device is turned on and off in a predetermined range of the water level during a predetermined time to distinguish between the suds and foreign substances in the drainage device.

The predetermined time may be a suds sensing time, which is taken to sense the suds according to the turning on and off of the drainage device.

It is another aspect of the present invention to provide a suds sensing method of a washing machine including determining whether a water level reaches a water discharge completion level in a predetermined water discharging time in a water discharging operation, determining whether the water level reaches a suds sensing level in a predetermined suds discharging time by controlling a drainage device such that the drainage device is turned on and off, when the water level does not reach the water discharge completion level in the predetermined water discharging time, and sensing the suds by controlling the drainage device such that the drainage device is turned on and off in a predetermined range of the water level when the water level reaches the suds sensing level in the predetermined suds discharging time.

It is another aspect of the present invention to provide a washing machine having a drainage device for discharging washing water and a detergent, including a water level sensing unit to detect a water level varying according to the operation of the drainage device, and a control unit to determine whether the water level reaches a water discharge completion level in a predetermined water discharging time, to discharge suds by controlling the drainage device such that the drainage device is turned on and off when the water level does not reach the water discharge completion level, and to sense the suds by detecting a variation in the water level.

According to another aspect of the invention, there is provided a method for sensing suds in a washing machine having a drainage pump, the method comprising: discharging water from the washing machine after a washing or rinsing operation has been performed by turning on the drainage pump; sensing a generation of suds by detecting whether a water level of the washing machine has reached a water discharge completion level in a predetermined time period; preliminary suds sensing by controlling the turning on and off of the drainage pump to distinguish between the suds and foreign substances in the drainage pump, when the water level does not reach the water discharge completion level in the predetermined time period; main suds sensing for controlling the turning on and off of the drainage pump, to distinguish between the suds and the foreign substances in the drainage pump, when the water level reaches the suds sensing level in the predetermined suds discharging time during the performing of the preliminary suds sensing; and eliminating the suds by repeatedly performing the rinsing operation, a discharging operation and a dehydrating operation of the washing machine.

The control unit may determine whether the water level reaches a suds sensing level in a predetermined suds discharging time according to the turning on and off of the drainage device, and control the drainage device such that the drainage device is turned on and off in a predetermined range of the water level when the water level reaches the suds sensing level.

For a better understanding of the invention, and to show how embodiments of the same may be carried into effect, reference will now be made, by way of example, to the accompanying diagrammatic drawings in which:
FIG. 1 is a sectional view of a washing machine of an embodiment of the present invention;
FIG. 2 is a block diagram of a suds sensing apparatus of a washing machine in accordance with an embodiment of the present invention;
FIG. 3 is a flow chart illustrating a suds sensing method of the washing machine in accordance with an embodiment of the present invention;
FIG. 4 is a flow chart illustrating an operation of discharging water in the suds sensing method of FIG. 3;
FIG. 5 is a graph illustrating the operation of discharging water of FIG. 4;
FIG. 6 is a flow chart illustrating an operation of preliminary suds sensing in the suds sensing method of FIG. 3;
FIG. 7 is a graph illustrating the operation of preliminary suds sensing of FIG. 6;
FIG. 8 is flow chart illustrating an operation of main suds sensing of the suds sensing method of FIG. 3; and
FIG. 9 is a graph illustrating the operation of main suds sensing of FIG. 8.

Reference will now be made in detail to embodiments of the present invention, an example of which is illustrated in the accompanying drawings, wherein like reference numerals refer to like elements throughout. The embodiments are described below to explain the present invention by referring to the figures.

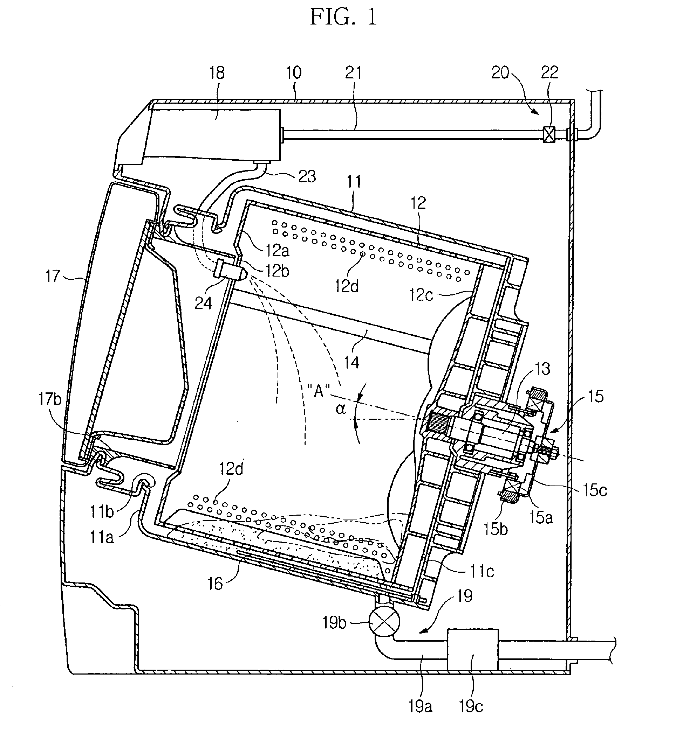

FIG. 1 is a sectional view of a washing machine of an embodiment of the present invention.

In FIG. 1, the washing machine of an embodiment of the present invention comprises a drum-type tub 11 installed in a main body 10 for containing washing water therein, and a rotary drum 12 rotatably installed in the tub 11.

The tub 11 slopes toward an installation ground of the washing machine at a designated angle (α) so that a front surface 11 a of the tub 11, through which an opening 11 b is formed, is located at a position higher than that of a rear surface 11c of the tub 11. The rotary drum 12 installed in the tub 11 has a same structure as that of the tub 11, so that a front surface 12a of the rotary drum 12, through which an opening 12b is formed, is located at a position higher than that of a rear surface 12c of the rotary drum 12.

That is, the front surface 12a of the rotary drum 12, provided with the opening 12b, slantedly ascends forward such that a rotary central line A of the rotary drum 12 meets the installation ground of the washing machine at the designated angle (α). Since a rotary shaft 13 connected to a central portion of the rear surface 12c of the rotary drum 12 is rotatably supported by the central portion of the rear surface 11c of the tub 11, the rotary drum 12 is rotated in the tub 11.

A plurality of through holes 12d are formed through the cylindrical surface of the rotary drum 12, and a plurality of lifters 14 for lifting and dropping the laundry when the rotary drum 12 is rotated are installed on the inner surface of the rotary drum 12.

A motor 15, serving as a driving device for rotating the rotary shaft 13 connected to the rotary drum 12 so that the washing machine performs washing, rinsing, and dehydrating operations, is installed outside the rear surface 11c of the tub 11. A heater 16 for heating washing water supplied to an inside of the tub 11 is installed in a lower part of the tub 11.

The motor 15 comprises a stator 15a fixed to the rear surface 11 c of the tub 11, a rotor 15b rotatably disposed outside the stator 15a, and a rotary plate 15c connecting the rotor 15b and the rotary shaft 13.

An opening 17b is formed through a front surface of the main body 10 at a position corresponding to the opening 12b of the rotary drum 12 and the opening 11 b of the tub 11 so that the laundry is inserted into or taken out of the rotary drum 12 through the opening 17b, and a door 17 for opening and closing the opening 17b is installed on the front surface of the main body 10.

A detergent supply device 18 for supplying a detergent and a water supply device 20 for supplying washing water are installed above the tub 11, and a drainage device 19 including a drainage pipe 19a, a drainage valve 19b and a drainage pump 19c for discharging water from the inside of the tub 11 to an outside of the tub 11 is installed below the tub 11.

An inside of the detergent supply device 18 is divided into a plurality of spaces, and the detergent supply device 18 is installed in the front surface of the main body 10 so that a user can easily put the detergent and a softener into the spaces of the detergent supply device 18.

The water supply device 20 comprises a water supply pipe 21 for supplying water to the tub 11, and a water supply valve 22 installed in the water supply pipe 21 for controlling a supply of the water by the water supply pipe 21. Here, the water supply pipe 21 is connected to the detergent supply device 18 so that water is supplied from the outside to the detergent supply device 18. A connection pipe 23 is installed between the detergent supply device 18 and the tub 11 so that the water, passed through the detergent supply device 18, is supplied to the tub 11, and a water supply nozzle 24 is installed at an outlet of the connection pipe 23. The above structure causes the water supplied to the inside of the tub 11 to pass through the detergent supply device 18, thereby causing the detergent in the detergent supply device 18, which dissolves in water, to be supplied to the tub 11.

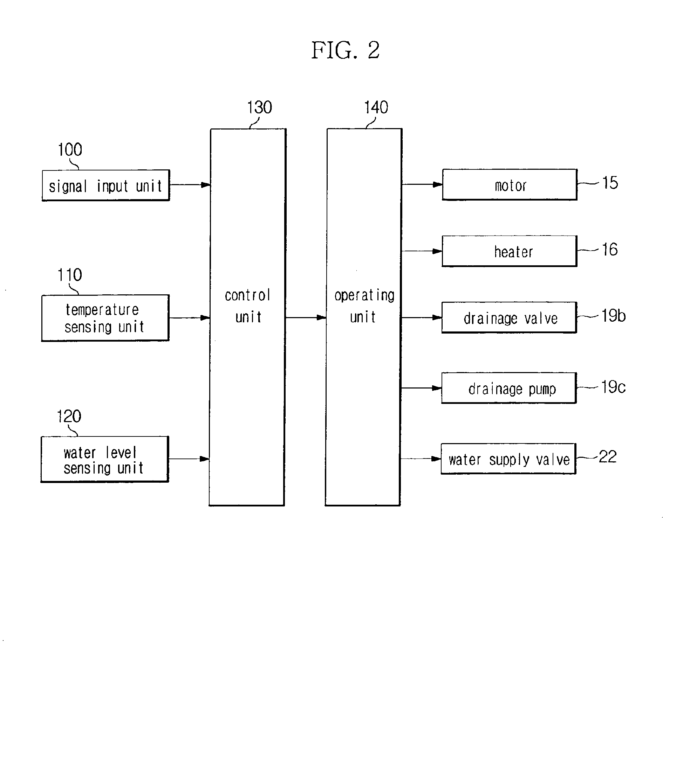

FIG. 2 is a block diagram of a suds sensing apparatus of a washing machine in accordance with an embodiment of the present invention. The suds sensing apparatus comprises a signal input unit 100, a temperature sensing unit 110, a water level sensing unit 120, a control unit 130, and an operating unit 140.

The signal input unit 100 inputs operating data, such as a washing operation, a washing temperature, a dehydration rpm, and whether a rinsing operation is added, which are selected by a user, to the control unit 130. The temperature sensing unit 110 senses the temperature of the washing water.

The water level sensing unit 120 senses a level of the washing water. Particularly, the water level sensing unit 120 senses data associated with a water level varying according to an amount of the washing water or suds discharged, and inputs the sensed data to the control unit 130.

The control unit 130 comprises a microcomputer for controlling an operation of the discharge pump 19c according to a variation in the water level data inputted from the water level sensing unit 120 and sensing a generation of suds, a malfunction of the discharge pump 19c, or a presence of foreign substances in the discharge pump 19c. The control unit 130 comprises a timer for counting an operating (on/off) time of the discharge pump 19c, and a table storing data, such as washing operations, capacities of the washing machine, and predetermined times and predetermined water levels according to capacities of the discharge pump 19c.

The control unit 130 senses the generation of suds by detecting whether the water level reaches a water discharge completion level in a discharge completion time predetermined when discharging the water. The control unit 130 then senses the generation of suds by detecting whether the water level reaches suds sensing water level in suds discharging time predetermined by rapidly discharging suds in sensing of preliminary suds performed to discriminate between the suds and foreign substances in the discharge pump 19c when the water level does not reach the water discharge completion level in the predetermined discharge completion time. Further, the control unit 130 senses the generation of suds by detecting whether a number of suds-sensing times is more than a designated number in suds sensing time predetermined during the operation of the main suds sensing performed to distinguish between the suds and the foreign substances in the discharge pump 19c when the water level reaches the suds sensing water level in the predetermined suds discharging time.

The driving unit 140 drives the motor 15, the heater 16, the drainage valve 19b, the drainage pump 19c, and the water supply valve 22 based on an operation control signals of the control unit 130.

Hereinafter, an operation of the above washing machine and the suds sensing method thereof will be described.

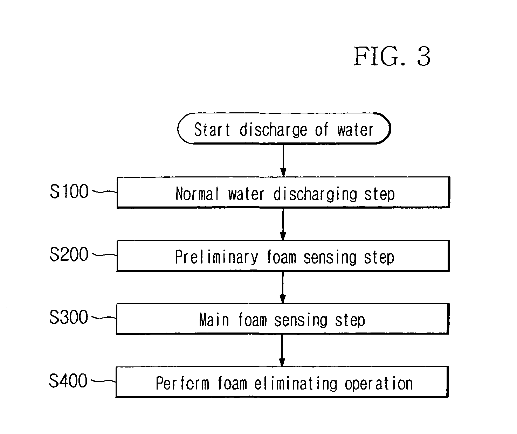

FIG. 3 is a flow chart illustrating the suds sensing method of the washing machine of an embodiment of the present invention. The suds sensing method of the embodiment is exhibited by suds sensing algorithm in a water discharging operation, which may be performed after a washing operation or after a rinsing operation.

In operation S100, when discharging water after the washing or rinsing operation is started, the generation of suds is sensed by detecting whether the water level reaches a water discharge completion level in a discharge completion time (T_{end}; i.e., the time for discharging a maximum amount of water according to washing operations) predetermined in the normal water discharging operation, in which the drainage pump 19c is turned on.

From operation S100, the process moves to operation S200, where preliminary suds sensing for controlling the turning on and off of the drainage pump 19c to distinguish between the suds and the foreign substances in the drainage pump 19c is performed, when the water level does not reach the water discharge completion level in the discharge completion time (T_{end}), thereby more rapidly discharging suds. Therefore, in the preliminary suds sensing operation S200, it is determined whether the water level reaches a suds sensing level in a predetermined suds discharging time (Tₚᵣₑ).

The preliminary suds sensing operation S200 serves to determine whether the reason that the water level does not reach the water discharge completion level in the discharge completion time (T_{end}) is caused by the generation of suds, or the malfunction of drainage pump 19c and foreign substances in the drainage pump 19c.

From operation S200, the process moves to operation S300, where main suds sensing for setting a designated water level and controlling the turning on and off of the drainage pump 19c to distinguish between the suds and the foreign substances in the drainage pump 19c is performed, when the water level reaches the suds sensing level in the predetermined suds discharging time (Tₚᵣₑ) in the preliminary suds sensing operation S200. Thereby, in operation 300, it is determined whether the number (N_{c}) of suds-sensing times is more than a designated number in a predetermined suds sensing time (Tₘₐᵢₙ).

The main suds sensing operation serves to determine whether the reason that the water level does not reach the suds sensing level in the predetermined suds discharging time (Tₚᵣₑ) is caused by the generation of suds or foreign substances in a small amount present in the drainage pump 19c.

When the number (N_{c}) of suds-sensing times is more than the designated number in the predetermined suds sensing time (Tₘₐᵢₙ) in operation S300, it is determined that suds is generated, and the process moves to operation S400, where a suds eliminating operation is performed.

The suds eliminating operation is performed by a general process in which water is re-supplied to the tub 11 and a rinsing operation by agitating the motor 15, a discharging operation and a dehydrating operation are repeated.

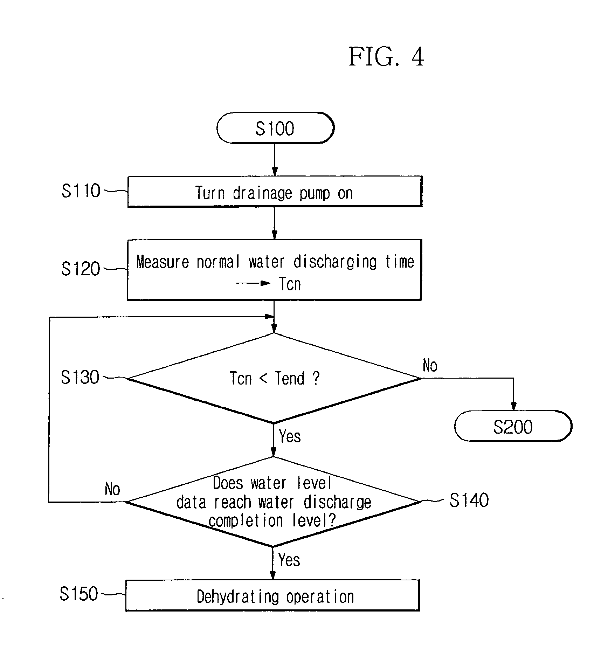

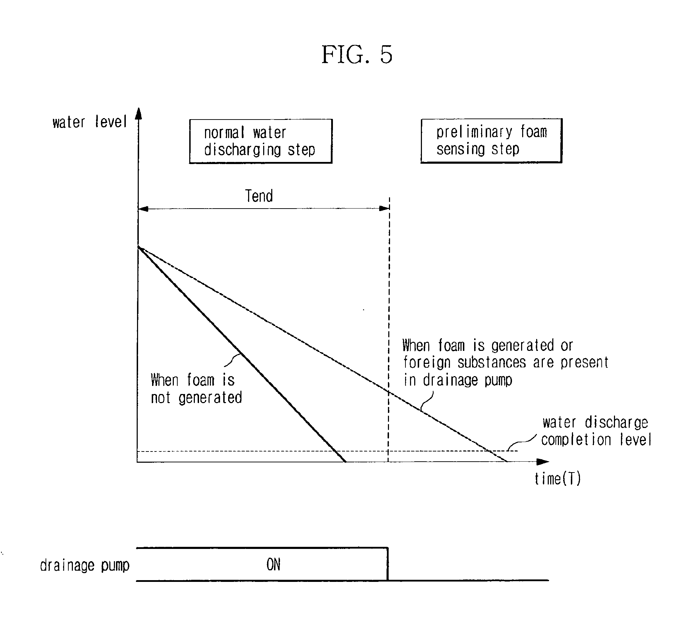

Hereinafter, with reference to FIGS. 4 and 5, the water discharging operation S100 will be described in detail.

A time (T) taken to discharge water in a course requiring the maximum amount of water is measured, and a time (T×2) obtained by doubling the time (T) is set to the discharge completion time (T_{end}; approximately 1 minute).

In operation S110, the drainage pump 19c is turned on to normally discharge washing water, from operation 110 the process moves to operation S120, where a normal water discharging time (T_{cn}) according to the turning on of the drainage pump 19c is measured.

From operation S120, the process moves to operation S130, where it is determined whether the measured normal water discharging time (T_{cn}) is less than the predetermined discharge completion time (T_{end}) When the measured normal water discharging time (T_{cn}) is less than the predetermined water discharge completion time (T_{end}) in operation S130, the process moves to operation S140, where it is determined whether the water level reaches the predetermined water discharge completion level (the minimum water level for determining a point of time the discharge of water is completed or the water level for performing the next operation after the operation of the drainage pump) by the discharging operation.

When the water level reaches the water discharge completion level in the predetermined water discharge completion time (T_{end}), and suds are not generated, as shown in FIG. 5, the discharge of water is generally completed in the water discharge completion time (T_{end}), from operation S140, the process moves to operation S150 where the dehydrating operation is performed.

However, when suds are generated or foreign substances are present in the drainage pump 19c, the water level does not reach the predetermined water discharge completion level in the water discharge completion time (T_{end}).

Accordingly, when the water level does not reach the water discharge completion level in the predetermined water discharge completion time (T_{end}), the preliminary suds sensing operation S200 for controlling the turning on and off of the drainage pump 19c to distinguish between the suds and the foreign substances in the drainage pump 19c is performed.

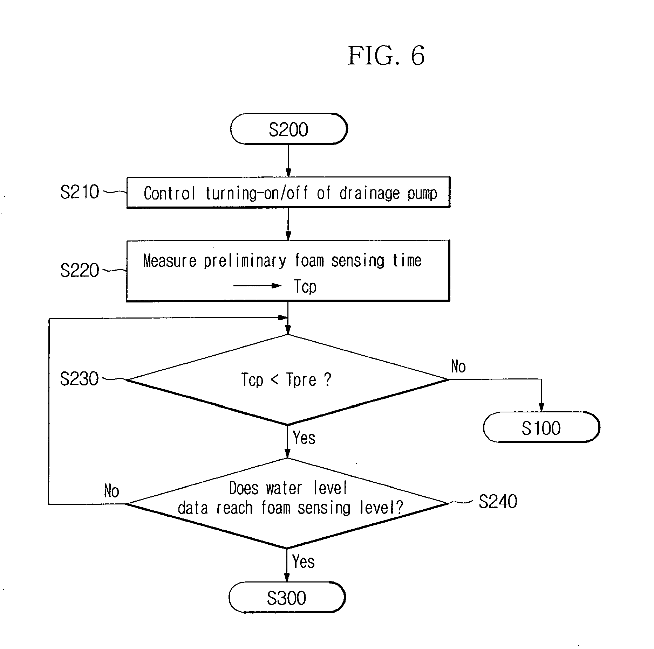

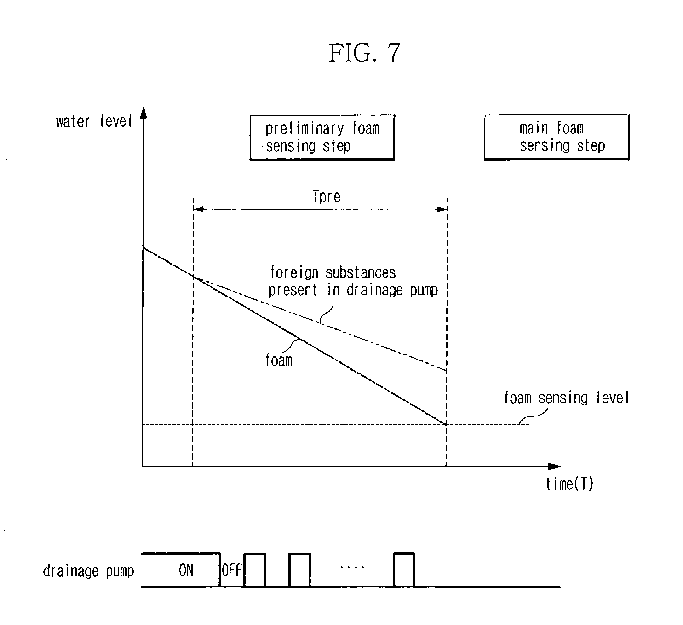

Hereinafter, with reference to FIGS. 6 and 7, operation S200, the sensing of the preliminary suds will be described in detail.

The main objective of preliminary suds sensing in operation S200 is to distinguish between the suds and the foreign substances in the drainage pump 19c before main suds sensing in operation S300 is performed.

The minimum time taken to reach the suds sensing level according to turning-on/off of the drainage pump 19c is set to the suds discharging time (Tₚᵣₑ; approximately 2 minutes), and the suds discharging time (Tₚᵣₑ) is determined by the volume of the washing machine and the capacity of the drainage pump 19c.

From operation S200 the process moves to operation S210 where the drainage pump 19c is turned on and off so as to rapidly discharge the suds, and a preliminary suds sensing time (T_{cp}) according to the turning on and off of the drainage pump 19c is measured.

From operation S220 the process moves to operation S230, where It is determined whether the measured preliminary suds sensing time (T_{cp}) is less than the suds discharging time (Tₚᵣₑ). When the measured preliminary suds sensing time (T_{cp}) is less than the suds discharging time (Tₚᵣₑ) in operation S230, the process moves to operation S240, where it is determined whether the water level data reaches the predetermined suds sensing level (the minimum water level for discriminating between the suds and the foreign substances in the drainage pump or the water level in an amount of approximately 20% of that of the washing water) by discharging the suds.

That is, as shown in FIG. 7, the foreign substances in the drainage pump 19c are discharged at a designated angle even when the drainage pump 19c is intermittently turned on/off. On the other hand, as shown in FIG. 7, the suds are discharged at a higher speed when the drainage pump 19c is intermittently turned on/off compared to when the drainage pump 19c is turned on, thereby allowing the water level data to reach the suds sensing level in the suds discharging time (Tₚᵣₑ).

Accordingly, when the water level data reaches the suds sensing level in the predetermined suds discharging time (Tₚᵣₑ), in operation S300, the main suds sensing operation for setting a designated water level and controlling the turning on and off of the drainage pump 19c, to more precisely distinguish between the suds and the foreign substances in the drainage pump 19c, is performed.

However, when foreign substances are present in the drainage pump 19c, the water level data does not reach the predetermined suds sensing level in the suds discharging time (Tₚᵣₑ).

When the water level data does not reach the suds sensing level in the predetermined suds discharging time (Tₚᵣₑ), in operation S100, the discharging of normal water, in which the drainage pump 19c is turned on to discriminate between the presence of foreign substances in the drainage pump 19c and the malfunction of the drainage pump 19c is performed.

When the drainage pump 19c malfunctions, the above-described procedure is repeated and the discharge of water is not achieved for a time set by a designer (discharge error time), thereby causing a discharge error.

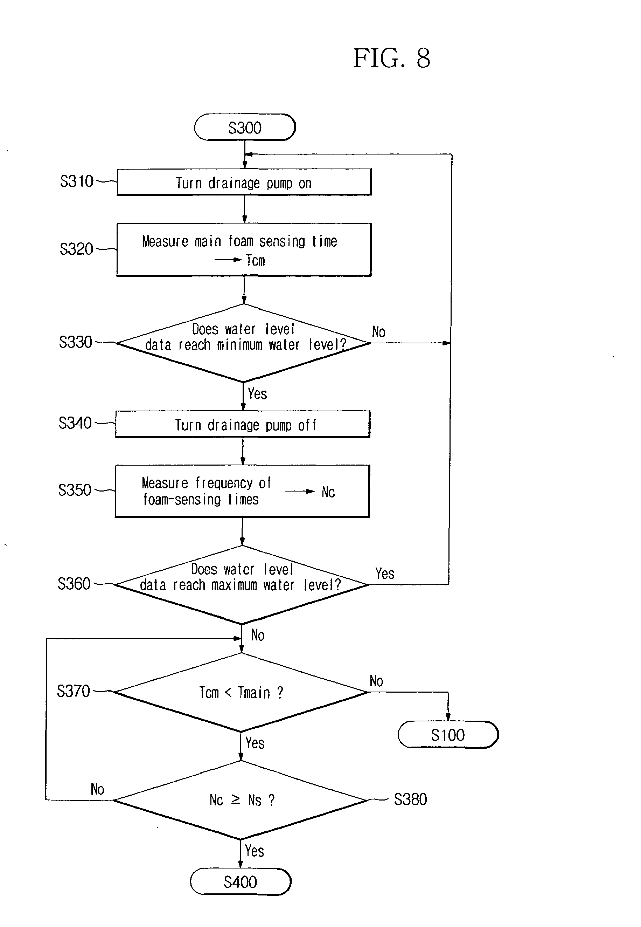

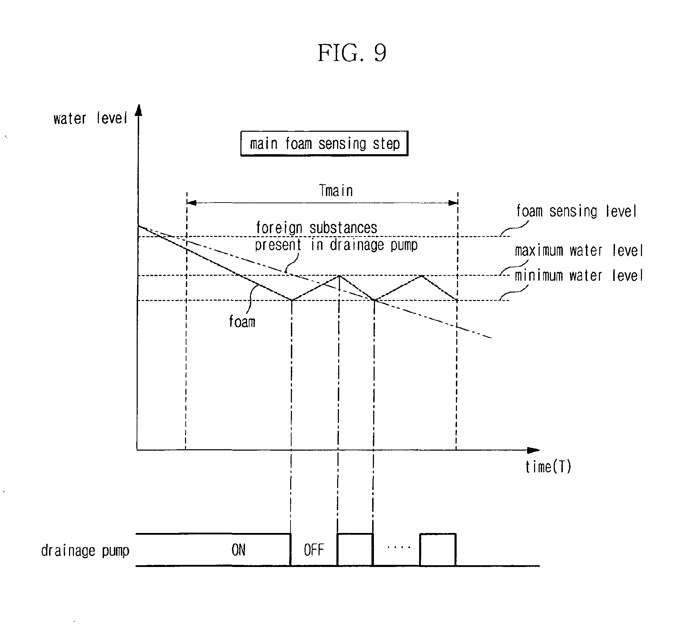

Hereinafter, with reference to FIGS. 8 and 9, operation S300, the main suds sensing operation will be described in detail.

The main suds sensing operation is performed to distinguish between any suds and foreign substances (in a small amount) in the drainage pump 19c passed by the preliminary suds sensing performed in operation S200, thereby more precisely sensing only the suds.

In order to more precisely sense the suds, a designated water level range (the maximum and minimum water levels of a designated range lower than the suds sensing level) is set, and a time limit when the number (N_{c}) of suds-sensing times according to the turning-on/off of the drainage pump 19c is more than a designated number (Nₛ); the number for determining that the generation of the suds is secured) is set to suds sensing time (Tₘₐᵢₙ). The suds sensing time (Tₘₐᵢₙ) is determined by the volume of the washing machine and the capacity of the drainage pump 19c.

In operation S310, the drainage pump 19c is turned on so as to discharge the suds (S310), and from operation S310, the process moves to operation S320 where a main suds sensing time (T_{cm}) is measured.

In operation S330, the water level data, which is lowered by the turning-on of the drainage pump 19c, is sensed, and it is determined whether the sensed water level data reaches the predetermined minimum water level. From operation S330, the process moves to operation S340 where then the water level data reaches the minimum water level, the drainage pump 19c is turned off.

When the suds are generated, as shown in FIG. 9, the water level rises again by turning the drainage pump 19c off. From operation S340, the process moves to operation S350 where the number of water level-rising times is set and the number (N_{c}) of suds-sensing times is measured.

From operation S350, the process moves to operation S360 where the water level data, which rises by the turning-off of the drainage pump 19c, is sensed, and it is determined whether the sensed water level data reaches the predetermined maximum water level. When the water level data reaches the maximum water level, the process moves from operation S360 back to operation S310 so that the drainage pump 19c is turned on.

As described above, in operation S370, the designated water level range is set, the main suds sensing time (T_{cm}) for controlling the turning-on/off of the drainage pump 19c is less than the predetermined suds sensing time (Tₘₐᵢₙ) From operation S370, the process moves to operation S380 where when the main suds sensing time (T_{cm}) is less than the suds sensing time (Tₘₐᵢₙ). it is determined that the measured number (N_{c}) of suds-sensing times is more than the predetermined number (Nₛ).

That is, as shown in FIG. 9, when foreign substances are present in the drainage pump 19c, the water level is decreased at a designated angle even when the designated water level range is set and the drainage pump 19c is intermittently turned on/off. On the other hand, as shown in FIG. 9, when the suds are generated, the water level is increased again when the drainage pump 19c is turned off during the intermittent turning-on/off of the drainage pump 19c, and thus the number (N_{c}) of suds-sensing times is more than the predetermined number (Nₛ) in the limited suds sensing time (Tₘₐᵢₙ),

Accordingly, when the number (N_{c}) of suds-sensing times is more than the predetermined number (Nₛ) in the predetermined suds sensing time (Tₘₐᵢₙ), it is determined that suds are generated, and in operation S400, the suds eliminating operation is performed.

However, when a small amount of foreign substances are present in the drainage pump 19c, the number (N_{c}) of suds-sensing times is not more than the predetermined number (Nₛ) in the suds sensing time (Tₘₐᵢₙ).

When the number (N_{c}) of suds-sensing times is not more than the predetermined number (Nₛ) in the predetermined suds sensing time (Tₘₐᵢₙ), the normal water discharging step (S100) for turning the drainage pump 19c on to discriminate between the presence of the foreign substances in the drainage pump 19c and the malfunction of the drainage pump 19c is performed so that the above procedure is repeated.

As described above, the suds sensing method according to an embodiment of the present invention precisely senses the generation of suds using discharge characteristics of suds in a water discharging step, and senses an error generated due to the malfunction of the drainage pump 19c and foreign substances present in the drainage pump 19c, thereby preventing the malfunction of the washing machine generated by erroneously recognizing the error generated due to the malfunction of the drainage pump 19c and foreign substances present in the drainage pump 19c as the generation of suds. Further, the suds sensing method of the present invention precisely senses suds momentarily generated in a rinsing operation.

As apparent from the above description, embodiments of the present invention provide a washing machine and suds sensing method thereof, in which the generation of suds is precisely sensed using discharge characteristics of suds in a water discharging operation, thereby increasing precision in sensing suds, and performing suds eliminating operation only when the suds are generated, thus reducing the waste of electricity due to errors in sensing suds and preventing the deterioration of washing performance.

Further, it is possible to precisely distinguish between the generation of suds, the malfunction of a drainage pump, and the presence of foreign substances in the drainage pump according to a variation of a water level in the water discharging operation. Therefore, the washing machine of embodiments of the present invention and the suds sensing method thereof actively cope with the generation of errors and improve consumer's satisfaction to products.

Although an embodiment of the invention has been shown and described, it would be appreciated by those skilled in the art that changes may be made in this embodiment without departing from the principles and spirit of the invention, the scope of which is defined in the claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A suds sensing method of a washing machine comprising:
discharging water by determining (S140) whether a water level reaches a water discharge completion level in a predetermined water discharging time in a water discharging operation;
discharging suds by controlling (S210) a drainage device such that the drainage device is turned on and off when the water level does not reach the water discharge completion level in the predetermined water discharging time; and
sensing the suds by detecting a water level varying according to the turning on and off of the drainage device.

2. The suds sensing method as set forth in claim 1, wherein the predetermined water discharging time is set to a water discharge completion time, which is time taken to discharge the maximum amount of the water during operations of the washing machine.

3. The suds sensing method as set forth in claim 1 or 2, wherein, in the discharging of the suds, the drainage device is controlled such that the drainage device is turned on (S310) and off (S340) during a predetermined time to distinguish between the suds and foreign substances in the drainage device.

4. The suds sensing method as set forth in claim 3, wherein the predetermined time is a suds discharging time, which is time taken to discharge the suds according to the turning on and off of the drainage device.

5. The suds sensing method as set forth in claim 4, wherein the suds discharging time is determined by a volume of the washing machine and a capacity of the drainage device.

6. The suds sensing method as set forth in any preceding claim, wherein, in the sensing of the suds, it is determined that the water level reaches a suds sensing level in a predetermined suds discharging time according to the turning on and off of the drainage device.

7. The suds sensing method as set forth in claim 6, wherein the drainage device is controlled such that the drainage device is turned on and off in a predetermined range of the water level to distinguish between the suds and the foreign substances in the drainage device, when the water level reaches the suds sensing level in the predetermined suds discharging time.

8. The suds sensing method as set forth in claim 7, wherein the predetermined range of the water level is set to lower than the suds sensing level, and comprises an upper limit and a lower limit for controlling the drainage device such that the drainage device is turned on/off.

9. The suds sensing method as set forth in claim 7 or 8, wherein a number of suds-sensing times according to the turning on and off of the drainage device is sensed, and it is determined that suds are generated when the number of suds-sensing times is more than a designated number.

10. The suds sensing method as set forth in any preceding claim, wherein, in the discharging of the suds, the drainage device is controlled such that the drainage device is turned on/off in a predetermined range of the water level during a predetermined time to distinguish between the suds and the foreign substances in the drainage device.

11. The suds sensing method as set forth in claim 10, wherein the predetermined time is a suds sensing time, which is time taken to sense the suds according to the turning on and off of the drainage device.

12. A suds sensing method of a washing machine comprising:
determining (S140) whether a water level reaches a water discharge completion level in a predetermined water discharging time in a water discharging operation;
determining (S240) whether the water level reaches a suds sensing level in a predetermined suds discharging time, by controlling a drainage device such that the drainage device is turned on and off when the water level does not reach the water discharge completion level in the predetermined water discharging time; and
sensing the suds by controlling the drainage device such that the drainage device is turned on and off in a predetermined range of the water level when the water level data reaches the suds sensing level in the predetermined suds discharging time.

13. The suds sensing method as set forth in claim 12, wherein the predetermined range of the water level is set lower than the suds sensing level, and comprises an upper limit and a lower limit for controlling the drainage device such that the drainage device is turned on and off.

14. The suds sensing method as set forth in claim 13, wherein a number of suds-sensing times according to the turning on and off of the drainage device is sensed, and it is determined (S380) that suds are generated when the number of suds-sensing times is more than a designated number.

15. A washing machine having a drainage device (19) for discharging washing water and a detergent, comprising:
a water level sensing unit (120) operable to detect a water level varying according to the operation of the drainage device (19); and
a control unit (130) operable to determine whether the water level reaches a water discharge completion level in a predetermined water discharging time, to discharge suds by controlling the drainage device (19) such that the drainage device is turned on and off when the water level does not reach the water discharge completion level, and to sense the suds by detecting the variation in the water level.

16. The washing machine as set forth in claim 15, wherein the control unit (130) is operable to determine whether the water level reaches a suds sensing level in a predetermined suds discharging time according to the turning on and off of the drainage device, and to control the drainage device (19) such that the drainage device is turned on and off in a predetermined range of the water level when the water level reaches the suds sensing level.

17. A method for sensing suds in a washing machine having a drainage pump (19c), the method comprising:
discharging water from the washing machine after a washing or rinsing operation has been performed by turning on the drainage pump (19c);
sensing a generation of suds by detecting whether a water level of the washing machine has reached a water discharge completion level in a predetermined time period;
preliminary suds sensing by controlling the turning on and off of the drainage pump to distinguish between the suds and foreign substances in the drainage pump, when the water level does not reach the water discharge completion level in the predetermined time period;
main suds sensing for controlling the turning on and off of the drainage pump, to distinguish between the suds and the foreign substances in the drainage pump, when the water level reaches the suds sensing level in the predetermined suds discharging time during the performing of the preliminary suds sensing; and
eliminating the suds by repeatedly performing the rinsing operation, a discharging operation and a dehydrating operation of the washing machine.
